# EUROPÄISCHE PATENTSCHRIFT

(11) **EP 1 973 298 B1**
(45) Veröffentlichungstag und Bekanntmachung des Hinweises auf die Patenterteilung: **11.09.2013**
(21) Anmeldenummer: 07005578.5
(22) Anmeldetag: 19.03.2007
(51) Int. Cl.: H04L 29/08

(54) **Verfahren zum Bereitstellen von Internetdiensten auf Internetplattformen**
Method for providing Internet services on Internet platforms
Procédé destinés à la préparation de services Internet sur des plates-formes Internet

(43) Veröffentlichungstag der Anmeldung: 24.09.2008
(73) Patentinhaber: Deutsche Post AG, 53113 Bonn (DE)
(72) Erfinder: Mayer, Boris, 53129 Bonn (DE); Ogilvie, Thomas, 53179 Bonn (DE)
(74) Vertreter: Jostarndt, Hans-Dieter

(56) Entgegenhaltungen:
- EP-A- 1 710 981
- EP-A1- 1 197 889
- US-A1- 2001 047 310
- US-A1- 2003 036 966
- US-A1- 2003 090 998
- US-B1- 6 615 258

## Beschreibung

Die Erfindung betrifft einen Netzwerkknoten und ein Verfahren zum Bereitstellen wenigstens eines Internetdienstes von Anbietern eines Platzanbieters für Nutzer eines Inhalteanbieters auf einer Internetplattform.

Zur Bereitstellung solcher Internetdienste werden in der Regel Applikationen verwendet, die auf einem Internetserver eines Platzanbieters ausgeführt werden. Der Aufruf der Applikationen durch einen Kunden des Platzanbieters, d.h. einen Nutzer des Inhalteanbieters, erfolgt dabei durch eine Anforderung über eine Website, die von dem Platzanbieter bereitgestellt wird.

Unter Platzanbietern, die in der Regel einen oder mehrere einzelne Anbieter umfassen, sind im Folgenden Anbieter von Platzierungsmöglichkeiten auf Internetseiten zu verstehen. Ebenso denkbar sind Platzierungsmöglichkeiten in Printmedien, in Fernsehprogrammen, in Rundunksendungen und dergleichen.

Die Kunden der Platzanbieter sind in der Regel so genannte Inhalteanbieter, umfassend einen oder mehrere Nutzer, die digitale Inhalte anbieten, für die eine Platzierungsmöglichkeit auf Internetseiten und dergleichen angefordert wird.

In der US-amerikanischen Offenlegungsschrift US 2003/090998 A1 wird ein Verfahren mit einem Netzwerkknoten zum Bereitstellen wenigstens eines Internetdienstes von Anbietern eines Platzanbieters für Nutzer eines Inhalteanbieters auf einer Internetplattform offenbart, wobei der Platzanbieter einen oder mehrere Anbieter und der Inhalteanbieter einen oder mehrere Nutzer umfasst und wobei Informationen über wenigstens eine zu vergebende Platzierung erfasst und wenigstens einem Teil der Nutzer der Plattform zugänglich gemacht werden. Dabei enthält der Netzwerkknoten einen äußeren Konnektor zum Empfangen einer Diensteanforderung, deren Erzeugung in einem Nutzercomputer der Plattform initiiert wird, und zum Übermitteln eines in dem Anbieterserver ermittelten Bearbeitungsergebnisses an den Nutzercomputer, sowie eine Registriereinheit zur Freischaltung zum Zugriff auf den Internetdienst. Der Netzwerkknoten umfasst weiterhin eine Authentifizier- und Autorisierungseinheit zum Zuteilen und/oder Überprüfen eines Berechtigungsprofils des Nutzers zum Zugriff auf den Internetdienst.

Die europäische Patentanmeldung EP 1 710 981 A offenbart einen Netzwerkknoten zum Bereitstellen wenigstens eines Internetdienstes, der in wenigstens einem Anbieterserver eines Dienstanbieters für Nutzer eines Internetmarktplatzes ausgeführt wird. Der Netzwerknoten umfasst einen äußeren Konnektor zum Empfangen einer Dienstanforderung, deren Erzeugung in einem Nutzercomputer eines Internetmarktplatznutzers initiierbar ist, und zum Übermitteln eines in dem Anbieterserver ermittelten Bearbeitungsergebnisses an den Nutzercomputer, wobei der äußere Konnektor in der Lage ist, eine an den Internetmarktplatz angepasste Formatänderung der Dienstanforderung und des Bearbeitungsergebnisses vorzunehmen. Weiterhin umfasst der Netzwerkknoten eine mit dem äußeren Konnektor verbundene Transformationseinheit zum Ermitteln wenigstens eines Anbieterservers zur Ausführung des Dienstes anhand von Angaben, die in der Dienstanforderung enthalten sind, und zum Adressieren der Dienstanforderung an den ermittelten Anbieterserver und einen mit der Transformationseinheit verbundenen inneren Konnektor zum Übermitteln der Dienstanforderung an den Anbieterserver und zum Empfangen des in dem Anbieterserver ermittelten Bearbeitungsergebnisses von dem Anbieterserver.

Die US-amerikanischen Offenlegungsschrift US 2003/036966 A1 offenbart eine Vorrichtung und ein Verfahren für die einfache Integration einer Web-fähigen Front-End-Anwendung mit einem Back-End-Geschäftsprozess. Eine E-Commerce-Anwendung und eine Back-End-Business-Processing-Anwendung enthalten jeweils einen Message Queue-Adapter, in dem eingehende und ausgehende Warteschlangen, die verwendet werden, um XML-Nachrichten weiterleiten zu können, definiert werden. Ein Integrationsknoten für die webbasierte Frontend-Anwendung ist mit den Eingangs- und Ausgangswarteschlagen und den Eingangs- und Ausgangswarteschlangen für die Geschäftsabwicklungsanwendung verbunden. Wenn der Integrationsknoten eine XML-Nachricht in einem ersten Format aus der Front-End-Anwendung empfängt, wandelt er die XML-Nachricht in eine XML-Nachricht in einem zweiten Format kompatibel zu der Back-End-Anwendung, um, und sendet die konvertierte XML-Nachricht an die Back- End-Anwendung. Ebenso wandelt der Integrationsknoten XML-Nachrichten von der Back-End-Anwendung in dem zweiten Format in XML-Nachrichten in das erste Format für die Front-End-Anwendung um.

In keiner dieser Offenbarungen ist das Problem der Authentifizierung und Autorisierung von Anbietern gelöst, insbesondere wenn unterschiedlichen Anbietern unterschiedliche Platzierungsmöglichkeiten zugeteilt werden können.

Es ist Aufgabe der Erfindung, derartige Internetdienste in einfacher Weise auf Internetplattformen bereitzustellen und dabei insbesondere den Aufwand zur Anbindung von Internetplattformen an die zur Ausführung der Internetdienste vorgesehenen Datenverarbeitungssysteme eines Platzanbieters zu minimieren, wobei die Dienste nur einer bekannten Gruppe von Anbietern zugänglich gemacht werden sollen, denen bestimmte Platzierungsmöglichkeiten zugeteilt werden können, und wobei sie diese Platzierungsmöglichkeiten einfach auswählen können sollen.

Erfindungsgemäß wird diese Aufgabe durch ein Verfahren nach dem Anspruch 14 gelöst.

Damit ist ein unterbrechungsfreier Betrieb des Netzwerkknotens möglich, während ein äußerer Konnektor mit den Netzwerkknoten verbunden oder von diesem getrennt wird. Ferner können Anpassungen eines äußeren Konnektors während des laufenden Betriebs des Netzwerkknotens vorgenommen werden, indem der anzupassende äußere Konnektor von dem Netzwerkknoten getrennt, angepasst und wieder mit dem Netzwerkknoten verbunden wird.

Die Begriffe "Platzanbieter", umfassend einen oder mehrere Anbieter, sowie "Inhalteanbieter", umfassend einen oder mehrere Nutzer, sind in ihrer weitesten Bedeutung zu verstehen. Insbesondere umfassen sie alle Entitäten, welche einen Übergang von Platzierungen in Medien wie Internet, Presse, Fernsehen, Rundfunk und dergleichen vereinbaren können. Insbesondere handelt es sich hierbei auch um Softwareagenten. Eine Einbeziehung natürlicher oder juristischer Personen ist gleichfalls möglich.

Durch die Freischaltung von Inhalteanbieter und/oder Platzanbieter durch eine Registriereinheit, wobei die Freischaltung in der Regel einmalig zu Beginn erfolgt, wird eine wichtige Sicherheitsvorkehrung getroffen.

Anschließend werden Berechtigungsprofile für die einzelnen Nutzer und/oder Anbieter von einer Authentifizier- und Autorisiereinheit zugeteilt und überprüft.

In einer bevorzugten Ausführungsform des Netzwerkknotens ist vorgesehen, dass die Überprüfung der Berechtigung eines Nutzers der Internetplattform zum Zugriff auf einen Internetdienst anhand eines der Internetplattform zugeordneten Plattformberechtigungsprofils und/oder anhand eines dem Nutzer zugeordneten Nutzerberechtigungprofils durchführbar ist.

Weiterhin ist vorgesehen, dass der Netzwerkknoten mit einer Schnittstelle zur Eingabe und/oder zur Speicherung und/oder zur Verwaltung und/oder Editierung von digitalen Inhalten verbunden ist.

Des Weiteren ist in einer vorteilhaften Ausführungsform vorgesehen, dass der Netzwerkknoten mit einer Schnittstelle zur Eingabe und/oder zur Speicherung und/oder zur Verwaltung und/oder Editierung von platzierungsrelevanten Informationen verbunden ist.

Auf diese Weise können Wertschöpfungsstufen in der Buchung von digitalen Inhalten, die derzeit von spezialisierten Dienstleistern wie beispielsweise Media-Agenturen wahrgenommen werden, automatisiert werden.

In einer bevorzugten Ausführung ist die Dienstanforderung in den Netzwerkknoten so konfigurierbar, dass sie digitale Inhalte mit oder ohne platzierungsrelevanten Informationen überträgt, ebenso ist die Übertragung wahlweise mit oder ohne Nutzerberechtigungsprofil möglich.

Weiterhin ist vorgesehen, dass die Berechtigung des Nutzers zum Zugriff auf einen Internetdienst anhand eines der Plattform zugeordneten Plattformberechtigungsprofils und/oder anhand eines dem Nutzer zugeordneten Nutzerberechtigungsprofils durch den Inhalteanbieter und/oder einen Administrator festgelegt wird.

Ebenso kann die Berechtigung des Anbieters zum Zugriff auf einen Internetdienst anhand eines der Plattform zugeordneten Plattformberechtigungsprofils und/oder anhand eines dem Anbieter zugeordneten Anbieterberechtigungsprofils durch den Platzanbieter und/oder einen Administrator festgelegt werden.

So ist es möglich, dass über die der vorliegenden Erfindung zu Grunde liegende internetbasierte Plattform verschiedene Nutzer des Inhalteanbieters und verschiedene Anbieter des Platzanbieters automatisiert miteinander die Platzierung von Inhalten auf Webseiten und dergleichen aushandeln und umsetzen können.

Ein Berechtigungsprofil für das Zugriffsrecht kann beispielsweise so angelegt sein, dass bestimmte Zugriffsmöglichkeiten eingeschränkt werden und/oder eine Zugriffsmöglichkeit mit einer Kostenpflicht belegt wird.

Der Anbieterserver des Netzwerkknotens kann unterschiedliche Bearbeitungsergebnisse erfassen und an die Plattform übermitteln.

Bearbeitungsergebnisse im Sinne der vorliegenden Erfindung umfassen beispielsweise Treffer auf eine Rechercheanfrage, eine Antwort auf eine Buchungsanfrage, eine Vormerkung zur Buchung ohne die Vornahme einer Buchung sowie die Vornahme einer endgültigen Buchung.

Der äußere Konnektor ist insbesondere mit einer Transformationseinheit zum Ermitteln wenigstens eines Anbieterservers verbunden.

Die Transformationseinheit erzeugt dabei in Abhängigkeit von dem in dem Anbieterserver ermittelten Bearbeitungsergebnis eine Benachrichtigung über das Bearbeitungsergebnis, die von dem äußeren Konnektor an einen Plattformserver übermittelt wird.

Der Netzwerkknoten umfasst vorzugsweise eine Steuerungs- und Berichtseinheit zum Erfassen und Auswerten der Vorgänge an den Anbieterservern und den Nutzercomputern.

Zugriffsrechte für den Nutzer umfassen vorzugsweise Recherchemöglichkeiten in den platzierungsrelevanten Informationen, des Weiteren Buchungsmöglichkeiten, insbesondere Buchungsvormerkungen und Buchungsanfragen sowie die Durchführung von Buchungen, und die Möglichkeit, Reports abzurufen.

Des Weiteren ist vorgesehen, dass nach einer erfolgten Buchung, d.h. nach einer gebuchten Platzierung eines digitalen Inhalts, für den Nutzer die Möglichkeit besteht, den späteren Zugriff auf den digitalen Inhalt für Dritte, vorzugsweise für Konsumenten, mit einer Kostenpflicht zu belegen.

Die Aufgabe wird gelöst durch ein Verfahren zum Bereitstellen wenigstens eines Internetdienstes von Anbietern eines Platzanbieters für Nutzer eines Inhalteanbieters auf einer Internetplattform nach Anspruch 1.
- Freischaltung eines Inhalteanbieters und/oder Freischaltung eines Platzanbieters zum Zugriff auf den Internetdienst,
- Zuteilung und/oder Überprüfung eines Berechtigungsprofils des Nutzers und/oder Anbieters zum Zugriff auf den Internetdienst
- Empfangen einer in einem Nutzercomputer initiierten Dienstanforderung in einem äußeren Konnektor eines Netzwerkknotens,
- Vornehmen von Formatänderungen der Dienstanforderung in dem äußeren Konnektor,
- Ermitteln eines Anbieterservers anhand von Angaben, die in der Dienstanforderung enthalten sind und Adressieren der Dienstanforderung an den Anbieterserver,
- Übermitteln der Dienstanforderung an den Anbieterserver,

Das Bearbeitungsergebnis kann insbesondere auch die Erstellung eines Buchungsbelegs umfassen.

Eine weitere bevorzugte Ausführungsform des Verfahrens sieht vor, dass der äußere Konnektor über ein Kommunikationsnetz mit wenigstens einem Nutzercomputer verbunden ist, wobei der Nutzercomputer über das Kommunikationsnetz mit einem Plattformserver verbunden ist.

In Abhängigkeit von dem in dem Anbieterserver ermittelten Bearbeitungsergebnis wird eine Benachrichtigung über das Bearbeitungsergebnis erzeugt, die von dem äußeren Konnektor an den Plattformserver und/oder an den Nutzercomputer direkt übermittelt wird.

Mit besonderem Vorteil wird eine Berechtigung des Nutzers zum Zugriff auf den jeweiligen Internetdienst überprüft.

Die Überprüfung der Berechtigung des Nutzers zum Zugriff auf einen Internetdienst kann anhand eines der Plattform zugeordneten Plattformberechtigungsprofils und/oder anhand eines dem Nutzer zugeordneten Nutzerberechtigungsprofils vorgenommen werden.

Vorteilhafte Weiterbildungen der Erfindung im Hinblick auf das Verfahren entsprechen den im Zusammenhang mit dem Netzwerkknoten beschriebenen Ausführungsformen der Erfindung.

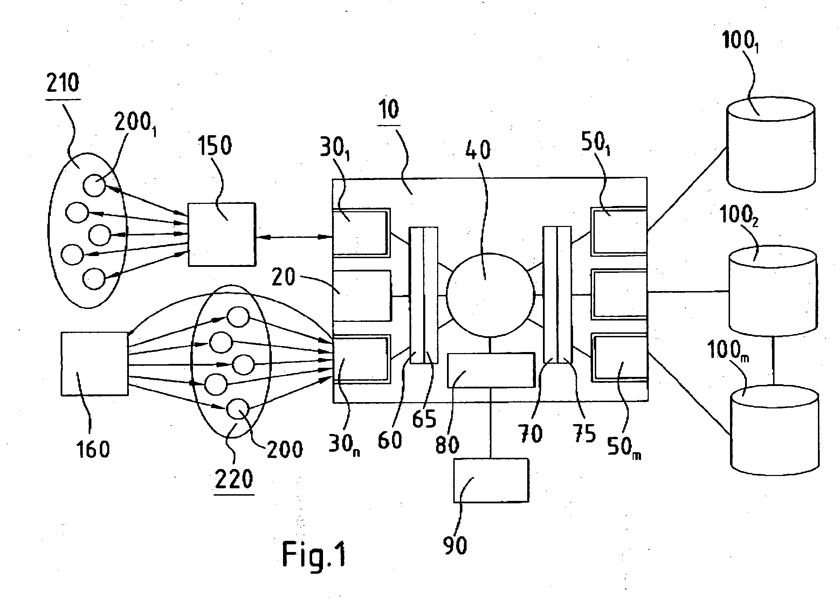

Weitere Besonderheiten und zweckmäßige Weiterbildungen der Erfindung ergeben sich aus den Unteransprüchen und der folgenden Darstellung bevorzugter Ausführungsbeispiele der Erfindung anhand der Figur 1.

Die Figur 1 zeigt eine schematische Darstellung einer Ausführungsform des erfindungsgemäßen Netzwerkknotens 10 mit angebundenen Internetplattformen und Anbieterservern 100₁, ..., 100ₘ, die im Folgenden mit der Bezugsziffer 100 bezeichnet werden, zur Ausführung von Dienstprogrammen.

Eine besonders bevorzugte Implementierung der Erfindung soll an dem Ausführungsbeispiel eines Netzwerkknotens 10 erläutert werden, der im Folgenden als Transformationsknoten bezeichnet wird.

Über das Internet ist der Transformationsknoten 10 an mehrere internetbasierte Plattformen angebunden. Beispielhaft sind in der Figur 1 dabei Anbindungen an zwei Plattformen dargestellt, die in unterschiedlichen Ausführungsformen realisiert sind.

In einem der dargestellten Fälle ist der Transformationsknoten 10 mit einem Plattformserver 150 einer internetbasierten Plattform verbunden, auf den Nutzer der Plattform ihrerseits mittels Nutzercomputern 200 zugreifen. Diese Gruppe der Nutzercomputer 200 der Nutzer eines Inhalteanbieters ist in der Figur 1 mit der Bezugsziffer 210 verbunden. Eine direkte Verbindung zwischen den Nutzercomputern 200 und dem Transformationsknoten 10 besteht dabei nicht, so dass der Datenaustausch zwischen den Nutzercomputern 200 und dem Transformationsknoten 10 über den Plattformserver 150 erfolgt. Eine derartige Plattform wird im Folgenden als Transitplattform bezeichnet und der Plattformserver 150 einer derartigen Plattform als Konsolidatorquelle.

In dem weiteren dargestellten Fall sind die Nutzercomputer 200 sowohl mit dem Transformationsknoten 10 als auch mit dem internetbasierten Plattformserver 160 verbunden, so dass ein Datenaustausch unmittelbar zwischen den Computern 200 und dem Transformationsknoten 10 erfolgen kann.

Eine derart ausgeführte Plattform wird im Folgenden als Flächenplattform bezeichnet und der Plattformserver 160 einer solchen Plattform als Streuquelle. Die Gruppe der Nutzercomputer 200 der Nutzer eines Inhalteanbieters ist in diesem Fall mit der Bezugsziffer 220 versehen.

Der Zugriff auf die Plattform erfolgt im Fall der Transitplattform und im Fall der Flächenplattform über das Internet auf einer Webseite der internetbasierten Plattform, die von dem Plattformserver 150, 160 bereitgestellt und mit einem Browserprogramm, das in den Nutzercomputern 200 ausgeführt wird, an einem Anzeigemittel der Nutzercomputer 200 dargestellt wird.

Der Transformationsknoten 10 enthält in einer vorteilhaften Ausführungsform der Erfindung äußere Konnektoren 30₁, ..., 30ₙ, die im Folgenden mit der Bezugsziffer 30 bezeichnet werden, und die im Fall der Transitplattform mit der Konsolidatorquelle 150 und im Fall der Flächenplattform mit den Nutzercomputern 200 über ein Kommunikationsnetzwerk, vorzugsweise das Internet, verbunden sind. Die äußeren Konnektoren 30 sind in Konnektorsteckplätze 20 des Transformationsknotens 10 eingesetzt.

Innerhalb des Transformationsknotens 10 besteht eine Verbindung zwischen den äußeren Konnektoren 30 und einer Authentifizier- und Autorisiereinheit 60, die ihrerseits mit der Transformationseinheit 40 in Verbindung steht. Für eine direkte Datenübertragung zwischen den äußeren Konnektoren 30 und der Transformationseinheit 40 kann die Authentifizier- und Autorisiereinheit 60 überbrückt werden.

Die Transformationseinheit 40 ist mit einer Prüfeinheit 70 verbunden, die ihrerseits mit inneren Konnektoren 50₁, ..., 50ₘ in Verbindung steht, die im Folgenden mit dem Bezugszeichen 50 bezeichnet werden. Auch hier kann eine direkte Verbindung zwischen der Transformationseinheit 40 und den inneren Konnektoren 50 geschaffen werden, bei welcher die Prüfeinheit 70 überbrückt wird. Die inneren Konnektoren 50 sind ebenfalls in Konnektorsteckplätze des Transformationsknotens 10 eingesetzt und verbinden den Transformationsknoten 10 mit Anbieterservern 100, auf denen Dienstprogramme zur Ausführung von Internetdiensten ausgeführt werden.

Ferner umfasst der Transformationsknoten 10 eine Steuer- und Berichtseinheit 80 zur Administrierung des Transformationsknotens 10 und zur Protokollierung.

Auf diese Weise kann analog zur Verwaltung an den Clientsystemen eine systematische Protokollierung aller Vorgänge stattfinden.

Der Transformationsknoten 10 kann als Hardware oder als Software ausgebildet sein. In einer vorteilhaften Ausführungsform der Erfindung wird er dabei in Form mehrerer Softwaremodule realisiert, die in einem Internetserver ausgeführt werden.

Den Nutzern einer Internetplattform werden Internetdienste angeboten, die von einem Platzanbieter zur Verfügung gestellt werden, der unabhängig von dem Plattformbetreiber sein kann. Dienstprogramme zur Ausführung der Internetdienste werden dabei auf jeweils wenigstens einem Anbieterserver 100 bereitgestellt, der von dem Platzanbieter betrieben wird. Bei den Internetdiensten handelt es sich in einer vorteilhaften Anwendung der Erfindung um die Platzierung von Inhalten auf Webseiten. Bei diesen Inhalten kann es sich beispielsweise um Werbebanner handeln.

Die Internetplattform stellt gewissermaßen eine Maklerinstanz zwischen Anbietern von digitalen Inhalten, d.h. den Nutzern eines Inhalteanbieters, und den Anbietern von Platzierungsmöglichkeiten auf Internetseiten, d.h. den Anbietern eines Platzanbieters, dar. Es können dabei beispielsweise N Nutzer eines Inhalteanbieters mit M Anbietern eines Platzanbieters automatisiert miteinander die Platzierung von Inhalten auf Webseiten aushandeln und umsetzen, wobei N und M natürliche Zahlen beliebiger Größe bezeichnen. Dies kann auch nach den Regeln einer Auktion oder einer Börse erfolgen. Neben der Platzierung von Inhalten auf Webseiten ist ebenso die Platzierung in Druckmedien, in Fernseh-oder Rundfunksendungen denkbar. Die digitalen Inhalte sind neben Werbebannern beispielsweise redaktionelle Beiträge oder kostenpflichtige Inhalte sonstiger Art. Kostenpflichtig in diesem Sinn bedeutet, dass der spätere Zugriff auf den Inhalt nach dessen Platzierung für einen Konsumenten kostenpflichtig ist. Ein Konsument muss dann vor Rezeption des vollständigen Inhalts einen Kostenbeitrag entrichten. Ohne Entrichtung des Kostenbeitrags wird beispielsweise nur eine Zusammenfassung des Inhalts oder ein Auszug des Inhalts angezeigt. Wird der Inhalt vom Konsumenten zur Rezeption ausgewählt, beispielsweise durch Anklicken, wird der Konsument auf eine Seite des Plattformbetreibers geleitet, auf der das Inkasso des durch den Inhalteanbieter definierten Kostenbetrags vorgenommen wird. Nach Bezahlung durch den Konsumenten wird der Konsument vom Plattformbetreiber zu den Inhalten des Inhalteanbieters weitergeleitet und kann dort den Inhalt vollständig rezipieren. Die Abrechnung mit dem Inhalteanbieter erfolgt beispielsweise direkt durch den Plattformbetreiber, wobei der Plattformbetreiber eine Gebühr einbehält.

Die Anforderung der Internetdienste wird mittelbar oder unmittelbar auf einer Webseite der Internetplattform, beispielsweise durch die Betätigung einer auf der Webseite angeordneten Schaltfläche, initiiert. Die Erfindung ermöglicht dabei, dass ein Internetdienst nicht auf einer Webseite des Platzanbieters, sondern direkt auf der Webseite der Internetplattform angefordert wird. Insbesondere können dabei auch Webseiten, die bei der Ausführung des Dienstes ggf. als Bearbeitungsergebnis bzw. Teilbearbeitungsergebnis angezeigt werden, dem Erscheinungsbild der Webseiten der Internetplattformen in einfacher Weise durch den Transformationsknoten 10 angepasst werden.

Mit dem Aufruf des Internetdienstes auf der Webseite der Internetplattform ist die Erzeugung einer Dienstanforderung verbunden, die insbesondere Angaben zur Ausführung des Internetdienstes enthält. Dabei handelt es sich beispielsweise um Nutzerdaten des Nutzers, die dieser in einem Dialogfeld der Webseite eingeben kann oder die in einer Datenbank des Plattformbetreibers gespeichert sind. Ferner enthält die Dienstanforderung Identifizierungsdaten der Internetplattform und umfasst wenigstens eine Anweisung, die es dem Transformationsknoten 10 ermöglicht, den angeforderten Internetdienst zu identifizieren. Diese Anweisung kann dabei auch im Prinzip in der Dienstanforderung enthalten sein.

So kann es beispielsweise vorgesehen sein, dass der angeforderte Internetdienst bzw. der zur Ausführung des Internetdienstes vorgesehene Anbieterserver 100 in dem Transformationsknoten 10 anhand der Art der in der Dienstanforderung enthaltenen Angaben identifiziert wird.

Im Fall der Flächenplattform wird die Dienstanforderung durch in eine Webseite eingebrachte Skripte generiert und direkt von dem Nutzercomputer 200 über das Internet an den Transformationsknoten 10 übermittelt. Bei einer Transitplariform kann die Dienstanforderung entweder durch Skripte in der Webseite der Internetplattform erzeugt und von dem Nutzercomputer 200 über die Konsolidatorquelle 150 an den Transformationsknoten 10 übermittelt werden oder sie kann nach der Übermittlung einer entsprechenden Aufforderung von dem Nutzercomputer 200 an die Konsolidatorquelle 150 innerhalb der Konsolidatorquelle 150 generiert werden.

Gleichfalls ist es bei einer Transitplattform möglich, dass die Dienstanforderung durch ein Skript mit dem Browserprogramm des Nutzercomputers 200 erzeugt und durch die Konsolidatorquelle 150 beispielsweise um Identifizierungsangaben der Internetplattform, um in einer Datenbank der Konsolidatorquelle 150 gespeicherte Nutzerdaten oder um in der Datenbank der Konsolidatorquelle 150 gespeicherte Plattform- und/oder Nutzerberechtigungsprofile ergänzt wird. Bei einer Flächenplattform werden derartige Angaben durch eine Funktionalität der in der Webseite der Interplattform enthaltenen Skripte in die Dienstanforderung eingebracht.

Ferner ist es möglich, dass eine einzige Dienstanforderung eine Anforderung mehrerer Internetdienste enthält.

Die Verbindung zwischen dem Transformationsknoten 10 und einer Internetplattform erfolgt über den äußeren Konnektor 30, der individuell an die Internetplattform angepasst ist. In den äußeren Konnektoren 30 werden dabei insbesondere Formatänderungen der Dienstanforderung und der in den Anbieterservern ermittelten Bearbeitungsergebnisse vorgenommen.

Dabei handelt es sich um statische Formatänderungen, die unabhängig von dem Inhalt der Dienstanforderung vorgenommen werden. Beispiele für derartige Formatänderungen sind Umsetzungen von Protokollformaten, wie z.B. eine Umsetzung von EDIFACT-Dokumenten in XML-Dokumente und umgekehrt, sowie Änderungen von Zeichensatzkodierungen und Änderungen von Feldbezeichnungen und -reihenfolgen in der Dienstanforderung. So können beispielsweise Datensätze wie Nutzerdaten, deren Format auf die Erfordernisse des Plattformservers 150, 160, wie ein bestimmtes in dem Plattformserver 150, 160 verwendetes Datenbankformat, ausgerichtet sind, konvertiert werden.

Durch die Möglichkeit der Formatänderung in den äußeren Konnektoren 30 kann sichergestellt werden, dass Änderungen, welche die Kommunikation zwischen dem Transformationsknoten 10 und einer Internetplattform betreffen, keine Auswirkungen auf die innere Funktionalität des Transformationsknotens 10 und keine Auswirkung auf die Gestaltung der Anbieterserver 100 bzw. der auf den Anbieterservern 100 ausgeführten Dienstprogramme haben.

Zur Anbindung einer Vielzahl von Internetplattformen verfügt der Transformationsknoten 10 über eine Vielzahl von Konnektorsteckplätzen 20 zur Aufnahme von äußeren Konnektoren 30. Dabei ist es möglich, äußere Konnektoren 30 im laufenden Betrieb des Transformationsknotens einzustecken und zu entfernen, so dass ein unterbrechungsfreier Betrieb des Transformationsknotens 10 bei einem Hinzutreten oder einem Wegfall einer Internetplattform möglich ist. Bei Änderungen, die an einem äußeren Konnektor 30 durchgeführt werden, kann dieser ebenfalls im aktivierten Zustand des Transformationsknotens 10 entfernt, angepasst und wieder eingesteckt werden, so dass auch hier keine Betriebsunterbrechung des Transformationsknotens 10 erforderlich ist.

Eine Dienstanforderung wird von dem Transformationsknoten 10 an demjenigen äußeren Konnektor 30 empfangen, der der entsprechenden Internetplattform zugeordnet ist, und es wird ggf. eine Formatänderung der vorgenannten Art vorgenommen. Ein Unterschied im Bezug auf die unterschiedenen Arten von Plattformen besteht dabei im Grundsatz nicht.

Von einem äußeren Konnektor 30 wird die Dienstanforderung innerhalb des Transformationsknotens 10 an eine Authentifizier- und Autorisiereinheit 60 übergeben, die zunächst in einem Authentifizierungsschritt überprüft, ob Internetdienste des Platzanbieters grundsätzlich genutzt werden dürfen. Die Authentifizierung erfolgt dabei auf der Basis der Identität der Internetplattform und/oder auf der Basis der Identität des Nutzers.

Die Authentifizierung geschieht anhand von Authentifizierungsinformationen, die in der Dienstanforderung enthalten sind und deren Authentizität durch den Einsatz bekannter kryptografischer Verfahren sichergestellt wird.

Ist eine erfolgreiche Authentifizierung nicht möglich, bedeutet dies, dass es sich nicht um eine authentische Dienstanforderung des Nutzers eines registrierten Inhalteanbieters handelt oder dass der Nutzer aus anderen Gründen nicht zur Inanspruchnahme von Internetdiensten des Platzanbieters berechtigt ist. In diesem Fall erzeugt die Authentifizier- und Autorisiereinheit 60 eine Fehlermeldung, die über den äußeren Konnektor 30 an den Nutzercomputer 200 übermittelt wird. Ferner kann eine Protokollierung der Dienstanforderung mittels der Steuer -und Berichtseinheit 80 vorgesehen sein.

Nach erfolgreicher Authentifizierung stellt die Authentifizier- und Autorisiereinheit 60 in einem Autorisierungsschritt die Berechtigung des Nutzers zur Nutzung von Internetdiensten fest. Dabei wird geprüft, welche Internetdienste in welchem Umfang durch den Nutzer genutzt werden dürfen. Dies erfolgt auf der Basis der Identität der Internetplattform und/oder der Identität des Nutzers.

Die Autorisierung einer Internetplattform erfolgt anhand eines Plattformberechtigungprofils, das vorzugsweise in der Authentifizier- und Autorisiereinheit 60 hinterlegt ist. Das Plattformberechtigungprofil enthält dabei Angaben darüber, in welchem Umfang Internetdienste von Nutzern der Plattform in Anspruch genommen werden können, d.h. welche Funktionen innerhalb des Internetdienstes von Nutzern der Plattform ausgeführt werden können.

Die Autorisierung eines Nutzers erfolgt vorzugsweise anhand eines Nutzerberechtigungsprofils in der Dienstanforderung, das ebenfalls kryptografisch abgesichert ist. Das Nutzerberechtigungsprofil wird vorzugsweise von Seiten der Internetplattform durch den Plattformserver 150, 160, bzw. ein in die Webseite der Internetplattform eingebettetes Skript in die Dienstanforderung eingebracht oder es ist in dem Transformationsknoten 10 in einer Datenbank hinterlegt. In dem Nutzerberechtigungsprofil ist dabei angegeben, in welchem Umfang der Nutzer Internetdienste des Platzanbieters in Anspruch nehmen kann. Auf diese Weise kann der Plattformbetreiber die Nutzer der Internetplattform mit unterschiedlichen Zugriffsrechten für die Internetdienste des Platzanbieters ausstatten.

Innerhalb des Internetdienstes zur Verfügung stehende Funktionen bzw. der Umfang, in dem der Internetdienst in Anspruch genommen werden kann, beziehen sich dabei beispielsweise auf die Möglichkeit, digitale Inhalte auf der internetbasierten Plattform zu speichern und zu verwalten.

Hierbei werden die digitalen Inhalte vom Inhalteanbieter auf den Speichermedien des Betreibers der Plattform abgespeichert und können aufgrund der Authentifizierungs- und Autorisierungsinformationen des Nutzers zu verschiedenen Zwecken genutzt werden. Beispielsweise können digitale Inhalte wie Textdateien, Graphikdateien, animierte Dateien, Musikdateien, Filmdateien und dergleichen durch den Inhalteanbieter zentral gespeichert werden und dort zum Editieren zugänglich gemacht werden. Das kann beispielsweise die Vergabe von Namen und Detailbeschreibungen betreffen sowie die Eingruppierung von digitalen Inhalten in spezifische Kategorien, die Definition von Hyperlinks für digitale Inhalte etc.

Hierbei kann bereits durch den Inhalteanbieter festgelegt werden, welche Nutzergruppen Zugriff auf hinterlegte digitale Inhalte haben, wobei das Zugriffsrecht vom Inhalteanbieter vorzugsweise durch zwei Parameter definiert werden kann. Zum einen kann die Zugriffsmöglichkeit eingeschränkt werden und zum anderen kann die Zugriffsmöglichkeit mit einer Kostenpflicht versehen werden. Im Fall der Belegung einer Zugriffsmöglichkeit mit einer Kostenpflicht kann unterschieden werden zwischen verschiedenen Zahlungsmodalitäten. Nutzer des Inhalteanbieters mit entsprechend umfangreichem Berechtigungsprofil können auf der Internetplattform liegende digitale Inhalte auch löschen.

Zur Durchführung der Autorisierung prüft die Authentifizier- und Autorisiereinheit 60 anhand des Plattformberechtigungsprofils und/oder des Nutzerberechtigungsprofils, ob und in welchem Umfang der Nutzer zur Inanspruchnahme des angeforderten Internetdienstes oder der angeforderten Internetdienste berechtigt ist. Ergibt die Prüfung, dass der Nutzer keine Berechtigung zur Inanspruchnahme des angeforderten Dienstes oder der angeforderten Dienste besitzt, wird vorzugsweise eine Fehlermeldung erzeugt und über den äußeren Konnektor 30 an den Nutzercomputer 200 des Nutzers übermittelt.

Falls die angeforderten Internetdienste erst bei einer Auswertung der Dienstanforderung in der Transformationseinheit 40 identifiziert werden, übergibt die Authentifizier- und Autorisiereinheit 60 das Plattformberechtigungsprofil bzw. das Nutzerberechtigungsprofil an die Transformationseinheit 40. Auch in diesem Fall kann innerhalb der Authentifizier- und Autorisiereinheit 60 überprüft werden, ob der Nutzer überhaupt zur Inanspruchnahme von Internetdiensten des Platzanbieters berechtigt ist, wobei eine Fehlermeldung erzeugt und an den Nutzercomputer 200 des Nutzers übermittelt wird, wenn dies nicht der Fall ist.

In dem Fall, dass mit der Dienstanforderung mehrere Internetdienste angefordert werden, entspricht die Authentifizierung und Autorisierung in der Authentifizier- und Autorisiereinheit 60 einer Zentralanmeldung, einem sog. "Single Sign-on", des Nutzers für die verschiedenen Internetdienste.

Die Transformationseinheit 40 nimmt die Dienstanforderung ggf. zusammen mit den ermittelten Berechtigungsinformationen von der Authentifizier- und Autorisiereinheit 60 entgegen. Abhängig von dem Inhalt der Dienstanforderung und ggf. abhängig von den in der Authentifizier- und Autorisiereinheit 60 ermittelten Berechtigungsinformationen wird die Dienstanforderung durch die Transformationseinheit 40 konvertiert. Da die Konvertierung im Gegensatz zu der statischen Formatänderung, die in den äußeren Konnektoren 30 vorgenommen wird, in Abhängigkeit von dem Inhalt der Dienstanforderung durchgeführt wird, wird sie auch als intelligente Konvertierung bezeichnet.

Die Transformationseinheit 40 übernimmt dabei ein sog. Routing der Dienstanforderung, d.h. abhängig von ihrem Inhalt wird der Anbieterserver 100 ermittelt, auf dem das Dienstprogramm zur Ausführung des angeforderten Internetdienstes ausgeführt wird, und die Dienstanforderung wird an diesen Anbieterserver 100 adressiert. Ferner erfolgen weitere intelligente Konvertierungen, wie beispielsweise eine Veränderung und Ergänzung von in der Dienstanforderung enthaltenen Daten.

Bei den intelligenten Konvertierungen kann es sich beispielsweise auch um Korrekturen handeln, die sich nach Plausibilitätsprüfungen oder nach einer Anwendung von Parsing-Regeln, d.h. von Regeln zur Interpretation einer Dienstanforderung, ergeben. Werden beispielsweise bei einem Internetdienst zur Platzierung von Werbebannern digitale Inhalte erkannt, die von Größe und Umfang nicht zu der vorgesehenen Platzierung passen, so kann dies von der Transformationseinheit 40 entweder korrigiert werden oder es kann eine Fehlermeldung zur Übermittlung über den äußeren Konnektor 30 an den Nutzercomputer 200 generiert werden, der die nicht plausible Dienstanforderung eingebracht hat.

Ebenso ist es im Rahmen der intelligenten Konvertierung möglich, Dienstanforderungen so zu verändern, dass statt des angeforderten Internetdienstes ein aktuellerer, verbesserter oder günstigerer Dienst, beispielsweise im Rahmen einer Sonderaktion für besonders preisgünstige Platzierungen von Werbebannern, ausgeführt wird.

Besonders vorteilhaft ist darüber hinaus ein sog. dynamisches Routing, bei dem die Verfügbarkeit der Anbieterserver 100 ermittelt und die Dienstanforderung an einen Anbieterserver 100 adressiert wird, für den die Verfügbarkeit festgestellt wird. Ferner kann auch vorgesehen sein, dass mittels der Transformationseinheit 40 ein sog. Load Balancing vorgenommen wird, bei dem neben der Verfügbarkeit auch die Auslastung des Servers 100 festgestellt und die Dienstanforderung an den Anbieterserver 100 mit der geringsten Auslastung übermittelt wird.

Nach der Bearbeitung in der Transformationseinheit 40 wird die Dienstanforderung über eine Prüfeinheit 70 oder direkt an den inneren Konnektor 50 übermittelt, der mit den ermittelten Anbieterservern 100 verbunden ist.

Die inneren Konnektoren 50 sind in der Lage, statische Formatänderungen des Dienstprogrammaufrufs vorzunehmen, und sind über die Konnektorsteckplätze 20 mit dem Transformationsknoten 10 verbunden, in die bei laufendem Betrieb innere Konnektoren 50 eingesteckt und aus denen bei laufendem Betrieb innere Konnektoren 50 ausgesteckt werden können.

Aufgrund der Funktionsweise der inneren Konnektoren 50 ist bei einer Anpassung der Dienstprogramme auf den Anbieterservern 100 lediglich eine Anpassung der Konnektoren 50, nicht jedoch eine Anpassung der Transformationseinheit 40 erforderlich. Ferner können derartige Anpassungen bei laufendem Betrieb des Transformationsknotens 10 vorgenommen werden, indem die betroffenen innneren Konnektoren 50 während der Anpassung ausgesteckt werden.

Über die inneren Konnektoren 50 wird die Dienstanforderung dem ermittelten Anbieterserver 100 übermittelt. Dies geschieht vorzugsweise über ein Netzwerk wie das Internet oder- wenn der Transformationsknoten 10 von dem Platzanbieter selbst betrieben wird - über ein internes Datennetzwerk des Platzanbieters.

Nach der Bearbeitung der Dienstanforderung in dem auf dem Anbieterserver 100 ausgeführten Dienstprogramm, d.h. nach der Ausführung des Dienstes, sendet der Anbieterserver 100 das Bearbeitungsergebnis, d.h. die in dem Anbieterserver 100 bei der Ausführung des Internetdienstes bzw. des Dienstprogramms ermittelten Daten, zurück an den Transformationsknoten 10, wo es wiederum von dem inneren Konnektor 50 empfangen wird.

Nach dem Empfang und nach der Durchführung von ggf. vorzunehmenden Formatänderungen innerhalb des inneren Konnektors 50 wird das Bearbeitungsergebnis an die Prüfeinheit 70 übergeben, in der eine formale Überprüfung des Bearbeitungsergebnisses vorgenommen wird. Dabei wird geprüft, ob das Bearbeitungsergebnis vollständig und formal korrekt ist. Im Hinblick auf Vollständigkeit wird dabei beispielsweise bei einer Anforderung einer Platzierung durch einen Nutzer überprüft, ob die Kategorien von angeforderter und angebotener Platzierung übereinstimmen. Die Kriterien zur Überprüfung sind für die Bearbeitungsergebnisse der verschiedenen Anbieterserver 100 in einer Datenbank des Transformationsknotens 10 hinterlegt.

Sind Vollständigkeit und Korrektheit nicht gegeben, so wird anstelle des Bearbeitungsergebnisses oder zusätzlich zu dem Bearbeitungsergebnis eine Benachrichtigung an den Nutzercomputer 200 des Nutzers übermittelt, in der auf einen Fehler hingewiesen wird.

Ein Nutzerberechtigungsprofil in der Authentifizier- und Autorisiereinheit 60 lässt sich auch in Abhängigkeit von dem Bearbeitungsergebnis verändern.

So ist es beispielsweise möglich, Nutzern, die einen bestimmten Internetdienst, beispielsweise eine bestimmte Platzierung auf einer Webseite, häufig in Anspruch nehmen, im Rahmen eines "Frequent User Program" erweiterte Berechtigungen und/oder Rabatte zuzuordnen, wobei die Authentifizier- und Autorisiereinheit 60 hierfür die Anzahl der zuvor an einen bestimmten Nutzer übermittelten Bearbeitungsergebnisse ermittelt.

Zur Administrierung und Überwachung des Transformationsknotens 10 ist eine Steuerungs- und Berichtseinheit 80 vorgesehen, die von einem Administrator bedient wird. An die Steuerungs- und Berichtseinheit 80 können ein oder mehrere externe Datenverarbeitungsgeräte 90 zur Auswertung von Nutzungsdaten des Transformationsknotens 10 angeschlossen sein. Die Steuerungs- und Berichtseinheit 80 ist auch in der Lage, die Inanspruchnahme des Transformationsknotens 10 und der angeschlossenen Anbieterserver 100 durch die Nutzer der Internetplattformen festzustellen und in Form von Zugriffstabellen und Statistiken zur Auswertung und Abrechnung bereitzustellen. Sämtliche Administrations- und Auswertungstätigkeiten können dabei auch über die angeschlossenen Datenverarbeitungsgeräte 90 vorgenommen werden.

Ein mögliches Anwendungsszenario der Erfindung betrifft die Bereitstellung von Platzierungen auf Webseiten, die von dem Betreiber einer Webseite zur Verfügung gestellt werden, für Nutzer eines Auktionsportals, bei dem Platzierungen im Rahmen von Auktionen von einem Anbieter an einen Nutzer versteigert werden. In der Regel werden die versteigerten Platzierungen dabei vom Anbieter zur Buchung frei gegeben, woraufhin der Nutzer aktiv bucht, so dass die Buchung der Platzierung rechtskräftig wird.

Im Rahmen der Erfindung können den in dem Auktionsportal auftretenden Anbietern beispielsweise folgende Internetdienste angeboten werden:
- Erzeugung von Statistiken hinsichtlich der Buchung von Platzierungen, der Kategorien der digitalen Inhalte, der Nutzer etc.,
- Erstellung von Rechnungen nach der verbindlichen Vergabe von Platzierungen,
- Generierung von Newslettern an Nutzer, die auf Grundlage des bisherigen Nutzerverhaltens erstellt werden,
- Dokumentation gebuchter Platzierungen, aufgegliedert nach Platzierung, Inhalt, Nutzer etc.

Ein Anbieter kann dabei beispielsweise bei der Abwicklung einer Auktion unmittelbar auf der Webseite des Auktionsportals eine Erstellung und Versendung einer Rechnung anstoßen.

Bei einem Auktionsportal handelt es sich in der Regel um einen Flächenmarktplatz. Bevorzugt wird eine Benachrichtigung über die Ausführung eines Platzierungsdienstes generiert und an die Streuquelle 160 des Auktionsportals übermittelt. Diese kann beispielsweise auch dazu dienen, dem Anbieter auf der Webseite des Auktionsportals eine Information über die erfolgreiche Ausführung des Platzierungsdienstes anzuzeigen.

Weiterhin ist es möglich, Zugriffslisten und Statistiken über die Nutzung der Platzierungsdienste durch Nutzer des Auktionsportals zu erstellen.

Schließlich dient der Transformationsknoten 10 dazu, die mit der Internetplattform vereinbarten Rahmenbedingungen für die Bereitstellung der Dienste, ein sog. "service level agreement", kurz "SLA", zu überprüfen und Abweichungen zu melden und zu dokumentieren. Wichtig in diesem Zusammenhang sind unter anderem die Verfügbarkeit der Anbieterserver 100, d.h. Anforderungen müssen bearbeitet werden können, und die Bearbeitungsdauer, d.h. Bearbeitungsergebnisse müssen innerhalb einer bestimmten Zeit vorliegen.

Um die internetbasierte Plattform nutzen zu können, muss sich ein Inhalteanbieter und/oder ein Platzanbieter einmalig registrieren. Dabei werden Stamm- und Zugangsdaten abgefragt und auf einer Datenbank, beispielsweise Oracle, gespeichert. Bei der Registrierung ist es möglich, für einen Inhalteanbieter verschiedene Nutzer anzulegen und diesen unterschiedliche Zugriffsrechte zuzuweisen. Ebenso ist es möglich, für einen Platzanbieter verschiedene Anbieter anzulegen und diesen unterschiedliche Rechte zuzuweisen.

Unterschiedliche Rechte im Hinblick auf die Anbieter umfassen beispielsweise die Berechtigung, Platzierungsmöglichkeiten frei zu schalten, zu sperren oder zu limitieren, sowie den Zugriff auf bestimmte Reportingseiten.

Authentifizierte Anbieter eines Platzanbieters, die das entsprechende Berechtigungsprofil besitzen, können ihnen zur Verfügung stehende Platzierungsmöglichkeiten auf einer internetbasierten Plattform hinterlegen. Hierfür kann beispielsweise bestimmt werden, welcher Platz zur Verfügung steht, definiert über einen spezifischen Link oder eine technisch eindeutige und automatisch ansteuerbare Beschreibung des verfügbaren Platzes. Ferner kann festgelegt werden, in welchem Zeitraum eine Platzierung zur Verfügung steht und zu welchem Preis. Die Preisgestaltung kann beispielsweise abhängig vom Datum, vom Nutzer oder von der Menge der angeforderten Platzierung vorgenommen werden. Man spricht in diesem Zusammenhang auch von datumsspezifischen Zuordnungen, kontaktmengenabhängigen Zuordnungen und aktivitätsmengenabhängigen Zuordnungen. In einem bevorzugten Modell kann - wie in einem Aktionsmodell - ein Startpreis für eine Platzierung definiert werden sowie eine Auktionsdauer hierfür festgelegt werden, so dass die verfügbare Platzierung in Abhängigkeit von der Nachfrage zu einem Höchstpreis aufgerufen wird. Ein Anbieter kann auch hinterlegen, wie oft eine Platzierung aufgerufen wird, welche digitalen Inhalte durch den Anbieter akzeptiert werden, welcher Kategorie die Platzierungsoption zuzuordnen ist und welche Zielgruppen auf die Platzierungsoption zugreifen. Des Weiteren kann definiert werden, welcher Inhalteanbieter bzw. welche Nutzer des Inhalteanbieters die Platzierungsoptionen des Platzanbieters bzw. der Anbieter des Platzanbieters einsehen dürfen.

Ein Platzanbieter kann auch spezielle Freigabemechanismen für Dienstanforderungen durch die Nutzer festlegen. Ebenso kann festgelegt werden, ob bei Mehrfachnutzungen durch einen Inhalteanbieter Rabatte bei der Berechnung der Platzierungsleistungen gewährt werden oder nicht. Auch ist es möglich, dass der Platzanbieter bestimmte Ausschlusskriterien in Bezug auf den Inhalteanbieter festlegt.

Bei sämtlichen der oben beschriebenen Möglichkeiten ist denkbar, dass sie entweder allgemein für einen Platzanbieter und/oder einen Inhalteanbieter gelten oder aber individuell für die einzelnen Anbieter eines Platzanbieters und/oder die einzelnen Nutzer eines Inhalteanbieters gelten.

Ein Nutzer kann über die Plattform verfügbare Platzierungsmöglichkeiten recherchieren, sofern diese für ihn frei geschaltet sind. Dabei stehen dem Nutzer verschiedene Möglichkeiten zur Verfügung: Er kann eine Direktsuche spezifischer Platzierungsoptionen durchführen, beispielsweise über die Eingabe des Namens eines Platzanbieters. Des Weiteren ist die Suche nach Platzierungskategorien, nach der Häufigkeit bestimmter Platzierungen, nach den durch die Platzierung angesprochene Zielgruppen unter den Konsumenten oder nach besonderen Empfehlungen hinsichtlich spezifischer Platzierungsoptionen möglich. Die einzelnen Suchkriterien können auch kombiniert werden, um zu Treffern zu gelangen, wie sie von einem Nutzer erwünscht sind. Nach Definition der Such- bzw. Selektionskriterien werden dem Nutzer des Inhalteanbieters die passenden Platzierungsmöglichkeiten dargestellt. Der Nutzer hat die Möglichkeit, alle einer Platzierungsmöglichkeit zugeordneten Informationen einzusehen, sofern sein Berechtigungsprofil das erlaubt, und ggf. eine Buchung vorzumerken, d.h. eine Platzierungsoption in den Warenkorb zu legen. Für den Fall, dass ein Nutzer eine Platzierungsoption zur Buchung vormerkt, kann er direkt, muss aber vor Abschluss der Buchung, der Platzierungsmöglichkeit einen auf der Plattform gespeicherten digitalen Inhalt zuordnen, wobei ein automatischer Abgleich vorgenommen wird, ob digitaler Inhalt und Platzierungsmöglichkeit kompatibel sind, beispielsweise im Hinblick auf Größe und technische Eigenschaften der Dateiformate sowie Kategorie von digitalem Inhalt und Platzierung.

Ein Nutzer oder Inhalteanbieter kann einem digitalen Inhalt verschiedene Platzierungsoptionen zuordnen oder einer Platzierungsoption auch verschiedene digitale Inhalte zuordnen.

Je nach dem vom Platzanbieter angebotenen Zahlungsmodell muss der Inhalteanbieter ein Angebot oder Gebot abgeben und eine gewünschte Menge an Platzierungseinheiten definieren. Die Einheiten können sich beispielsweise nach Dauer einer Platzierung, nach Häufigkeit des Anklickens durch Konsumenten etc. bemessen.

Nach Wahl einer Platzierung und der Zuordnung von digitalen Inhalten kann ein Nutzer oder Inhalteanbieter in einem sog. konsolidierenden Zwischenschritt die zur Buchung vorgemerkten Vorgänge einsehen und ggf. noch ändern oder aber die Buchung initiieren.

Nach Initiierung der Buchung durch einen Nutzer wird der Anbieter automatisch informiert, beispielsweise über eine Email, dass eine Anfrage zur Buchung einer Platzierungsmöglichkeit vorliegt. Der Platzanbieter kann über eine automatisierte Benachrichtigung die Detaildaten der Platzierungsanfrage einsehen und der Buchungsanfrage zustimmen oder diese ablehnen. Daraufhin wird der Nutzer automatisiert über den Freigabestatus seiner Buchung informiert. Im Fall einer positiven Rückmeldung durch den Platzanbieter erhält der Nutzer oder Inhalteanbieter die Möglichkeit, die Buchung zu aktivieren. Mit Aktivierung der Buchung wird die Buchung rechtskräftig.

Mit einer rechtskräftigen Buchung werden unterschiedliche Finanztransaktionen ausgelöst, beispielsweise die Entrichtung von Platzierungsgebühren, Abwicklungsgebühren, Stornokosten, die Rückerstattung von Gebühren und dergleichen.

Die Abwicklung dieser Vorgänge kann auf unterschiedliche Weise mit bekannten Bezahlverfahren erfolgen.

Sowohl ein Inhalteanbieter als auch ein Platzanbieter haben die Möglichkeit, über die internetbasierte Plattform Reports über gebuchte Inhalte abzurufen. Die Reports können automatisiert verteilt oder auf Nachfrage bzw. durch Auswahl bestimmter Reportingparameter erstellt werden. Parameter für das Reporting sind beispielsweise Klickraten, Zugriffstatistiken etc.

Des Weiteren ist es denkbar, dass Platzanbieter in einer Art Börse oder Auktion verfügbare Platzierungsoptionen anbieten, die Inhalteanbieter einsehen und erwerben können. Auf diese Weise können Platzanbieter verbliebene, noch freie Platzierungen auf Internetseiten vergeben.

### Bezugszeichenliste:

- 10: Transformationsknoten
- 20: Konnektorsteckplatz
- 30; 30₁, ..., 30ₙ: äußerer Konnektor
- 40: Transformationseinheit
- 50; 50₁, ..., 50ₘ: innerer Konnektor
- 60: Authentifizier- und Autorisiereinheit
- 65: Registriereinheit
- 70: Prüfeinheit
- 75: Registriereinheit
- 80: Steuerungs- und Berichtseinheit
- 90: Datenverarbeitungsgerät
- 100; 100₁, ..., 100ₘ: Anbieterserver
- 150: Konsolidatorquelle (Transitplattform)
- 160: Streuquelle (Flächenplattform)
- 200: Nutzercomputer
- 210,220: Gruppe von Nutzercomputern eines Inhalteanbieters

## Patentansprüche

1. Verfahren zum Bereitstellen wenigstens eines Internetdienstes von Anbietern eines Platzanbieters für Nutzer eines Inhalteanbieters auf einer Internetplattform, wobei der Platzanbieter einen oder mehrere Anbieter und der Inhalteanbieter einen oder mehrere Nutzer, die digitale Inhalte anbieten, umfasst und wobei Informationen eines Anbieters des Platzanbieters über wenigstens eine zu vergebene Platzierung erfasst und wenigstens einem Teil der Nutzer der Plattform zugänglich gemacht werden, mit den folgenden Schritten:
- Freischaltung eines Inhalteanbieters und/oder Freischaltung eines Platzanbieters zum Zugriff auf den Internetdienst,
- Zuteilung und/oder Überprüfung eines Berechtigungsprofils des Nutzers und/oder Anbieters zum Zugriff auf den Internetdienst
- Empfangen einer in einem Nutzercomputer (200) initiierten Dienstanforderung in einem äußeren Konnektor (30) eines Netzwerkknotens (10),- Vornehmen von Formatänderungen der Dienstanforderung in dem äußeren Konnektor (30),
- Ermitteln eines Anbieterservers (100) über eine Verbindung des äußeren Konnektors (30) mit einer Transformationseinheit (40) anhand von Angaben, die in der Dienstanforderung enthalten sind, und Adressieren der Dienstanforderung an den Anbieterserver (100),
- Übermitteln der Dienstanforderung an den Anbieterserver (100) über einen inneren Konnektor (50),
- Ermitteln eines Bearbeitungsergebnisses in dem Anbieterserver (100) nach der Bearbeitung der Dienstanforderung in dem auf dem Anbieterserver (100) ausgeführten Dienstprogramm und Übermitteln des Bearbeitungsergebnisses über den inneren Konnektor (50) an den Netzwerkknoten (10),
- Empfangen des Bearbeitungsergebnisses in dem Netzwerkknoten (10) und Übermitteln des Bearbeitungsergebnisses an den Nutzercomputer (200).
- Zuteilen und/oder Überprüfen der Berechtigung des Nutzers und/oder Anbieters zum Zugriff auf einen Internetdienst über eine Authentifizier- und Autorisierungseinheit (60) anhand eines der Plattform zugeordneten Plattformberechtigungsprofils und/oder anhand eines dem Nutzer zugeordneten Nutzerberechtigungsprofils.
- Freischaltung für einen Inhalteanbieter über eine erste Registriereinheit (65) und/oder Freischaltung für einen Platzanbieter über eine zweite Registriereinheit (75) zum Zugriff auf den Internetdienst, wobei der Netzwerkknoten Zugriff auf eine Datenbank hat, in der für einen Platzanbieter verschiedene Anbieter mit unterschiedlichen Rechten ablegbar sind,
- Hinterlegung von Platzierungsmöglichkeiten, die authentifizierten Anbietern eines Platzanbieters, die das entsprechende Berechtigungsprofil besitzen, zur Verfügung stehen, auf einer internetbasierten Plattform,

2. Verfahren nach Anspruch 1,
**dadurch gekennzeichnet,**
**dass** die Dienstanforderung eine Rechercheanfrage und/oder ein Gebot und/oder eine Buchungsanfrage für mindestes eine durch einen Anbieter zu vergebende Platzierung umfasst.

3. Verfahren nach einem der vorherigen Ansprüche,
**dadurch gekennzeichnet,**
**dass** das Bearbeitungsergebnis einen Recherchetreffer und/oder eine Antwort auf eine Buchung und/oder die Vornahme einer Buchung für mindestens eine durch den Anbieter zu vergebene Platzierung umfasst.

4. Verfahren nach einem der vorherigen Ansprüche,
**dadurch gekennzeichnet,**
**dass** der äußere Konnektor (30) über ein Kommunikationsnetz mit wenigstens einem Nutzercomputer (200) verbunden ist, wobei der Nutzercomputer (200) über das Kommunkationsnetz mit einem Plattformsever (150,160) verbunden ist.

5. Verfahren nach einem der vorherigen Ansprüche,
**dadurch gekennzeichnet,**
**dass** in Abhängigkeit von dem in dem Anbieterserver (100) ermittelten Bearbeitungsergebnis eine Benachrichtigung über das Bearbeitungsergebnis erzeugt wird, die von dem äußeren Konnektor (30) an den Plattformserver (150,160) und/oder an den Nutzercomputer (200) direkt übermittelt wird.

6. Verfahren nach einem der vorherigen Ansprüche,
**dadurch gekennzeichnet,**
**dass** eine Berechtigung des Nutzers zum Zugriff auf den Internetdienst überprüft wird.

## Claims

1. A method for providing at least one Internet service by providers of a server space provider to users of a content provider on an Internet platform, whereby the server space provider comprises one or more providers, while the content provider comprises one or more users who offer digital content, and whereby information of a provider of the server space provider about at least one placement to be granted is acquired and made available to at least some of the users of the platform, encompassing the following steps:
- a content provider is activated and/or a server space provider is activated for access to the Internet service,
- an authorization profile of the user and/or provider is assigned and/or verified for access to the Internet service,
- a service request initiated in a user computer (200) is received in an external connector (30) of a network node (10),
- format changes are made to the service request in the external connector (30),
- a provider server (100) is ascertained via a connection of the external connector (30) to a transformation unit (40) on the basis of information contained in the service request, and the service request is addressed to the provider server (100),
- the service request is transmitted to the provider server (100) via an internal connector (50),
- a processing result is ascertained in the provider server (100) after the processing of the service request in the service program executed on the provider server (100), and the processing result is transmitted to the network node (10) via the internal connector (50),
- the processing result is received in the network node (10) and the processing result is transmitted to the user computer (200),
- the authorization of the user and/or service provider to access an Internet service is assigned and/or verified by means of an authentication and authorization unit (60) on the basis of a platform authorization profile associated with the platform, and/or on the basis of a user authorization profile associated with the user,
- activation is carried out for a content provider via a first registration unit (65) and/or activation is carried out for a service space provider via a second registration unit (75) for access to the Internet service, whereby the network node has access to a database in which various providers with different rights can be stored for a server space provider,
- placement possibilities that are available to authenticated providers of a server space provider that have the appropriate authorization profile are stored on an Internet-based platform.

2. The method according to claim 1,
**characterized in that**
the service request comprises a search request and/or a command and/or a booking request for at least one placement to be granted by a provider.

3. The method according to one of the preceding claims,
**characterized in that**
the processing result comprises a search hit and/or a response to a booking and/or the making of a booking for at least one placement to be granted by the provider.

4. The method according to one of the preceding claims,
**characterized in that**
the external connector (30) is connected to at least one user computer (200) via a communication network, whereby the user computer (200) is connected to a platform server (150, 160) via the communication network.

5. The method according to one of the preceding claims,
**characterized in that**,
as a function of the processing result ascertained in the provider server (100), a notification about the processing result is generated which is then transmitted directly from the external connector (30) to the platform server (150, 160) and/or to the user computer (200).

6. The method according to one of the preceding claims,
**characterized in that**
an authorization of the user to access the Internet service is verified.

## Revendications

1. Procédé de mise à disposition d'au moins un service Internet de fournisseurs d'un fournisseur d'emplacement pour des utilisateurs d'un fournisseur de contenus sur une plate-forme Internet, le fournisseur d'emplacement incluant un ou plusieurs fournisseurs et le fournisseur de contenu, un ou plusieurs utilisateurs qui offrent des contenus numériques, et des informations d'un fournisseur du fournisseur d'emplacement relatives à au moins un emplacement à attribuer étant saisies et rendues accessibles à au moins une partie des utilisateurs de la plate-forme, comportant les étapes suivantes :
- autoriser un fournisseur de contenus et/ou autoriser un fournisseur d'emplacement à accéder au service Internet ;
- attribuer et/ou vérifier un profil d'autorisation de l'utilisateur et/ou du fournisseur à accéder au service Internet ;
- recevoir une requête de service initialisée dans un ordinateur d'utilisateur (200) dans un connecteur externe (30) d'un noeud de réseau (10) ;
- effectuer des modifications de format de la requête de service dans le connecteur externe (30) ;
- déterminer un serveur de fournisseur (100) via une liaison entre le connecteur externe (30) et une unité de transformation (40) à l'aide d'indications contenues dans la requête de service et adresser la requête de service au serveur de fournisseur (100) ;
- transmettre la requête de service au serveur de fournisseur (100) via un connecteur interne (50) ;
- déterminer un résultat de traitement dans le serveur de fournisseur (100) après le traitement de la requête de service dans le programme de service exécuté sur le serveur de fournisseur (100) et transmettre le résultat du traitement au noeud de réseau (10) via le connecteur interne (50) ;
- recevoir le résultat du traitement dans le noeud de réseau (10) et transmettre le résultat du traitement à l'ordinateur d'utilisateur (200) ;
- attribuer et/ou vérifier l'autorisation de l'utilisateur et/ou du fournisseur à accéder à un service Internet par l'intermédiaire d'une unité d'authentification et d'autorisation (60) à l'aide d'un profil d'autorisation de plate-forme associé à la plate-forme et/ou à l'aide d'un profil d'autorisation d'utilisateur associé à l'utilisateur ;
- autoriser un fournisseur de contenus, via une première unité d'enregistrement (65), et/ou autoriser un fournisseur d'emplacement, via une deuxième unité d'enregistrement (75), accéder au service internet, le noeud de réseau ayant accès à une base de données dans laquelle peuvent être déposés, pour un fournisseur d'emplacement, différents fournisseurs avec différents droits ;
- consigner sur une plate-forme basée Internet des possibilités d'emplacement disponibles pour des fournisseurs authentifiés d'un fournisseur d'emplacement qui possèdent le profil d'autorisation correspondant.

2. Procédé selon la revendication 1, **caractérisé en ce que** la requête de service comprend une requête de recherche et/ou une offre et/ou une requête de réservation pour au moins un emplacement à attribuer par un fournisseur.

3. Procédé selon l'une des revendications précédentes, **caractérisé en ce que** le résultat du traitement inclut un résultat de recherche et/ou une réponse à une réservation et/ou l'exécution d'une réservation pour au moins un emplacement à attribuer par le fournisseur.

4. Procédé selon l'une des revendications précédentes, **caractérisé en ce que** le connecteur externe (30) est relié à au moins un ordinateur d'utilisateur (200) via un réseau de communication, l'ordinateur d'utilisateur (200) étant relié à un serveur de plate-forme (150, 160) via le réseau de communication.

5. Procédé selon l'une des revendications précédentes, **caractérisé en ce qu'**est générée, en fonction du résultat du traitement déterminé dans le serveur de fournisseur (100), une notification relative au résultat du traitement qui est transmise directement du connecteur externe (30) au serveur de plate-forme (150, 160) et/ou à ordinateur d'utilisateur (200).

6. Procédé selon l'une des revendications précédentes, **caractérisé en ce qu'**une autorisation de l'utilisateur d'accéder au service Internet est vérifiée.
